Europäisches Patentamt

European Patent Office

Office européen des brevets

(11) Publication number: **0 171 210**
**B1**

# EUROPEAN PATENT SPECIFICATION

(45) Date of publication of patent specification: **07.06.89**

(21) Application number: **85305016.9**

(22) Date of filing: **12.07.85**

(51) Int. Cl.⁴: **G 21 C 3/32, G 21 C 3/34**

(54) Device and method for repairing a fuel rod assembly.

(30) Priority: **13.07.84 US 630878**

(43) Date of publication of application:
**12.02.86 Bulletin 86/07**

(45) Publication of the grant of the patent:
**07.06.89 Bulletin 89/23**

(84) Designated Contracting States:
**BE CH DE FR GB LI SE**

(56) References cited:
**EP-A-0 117 073**
**FR-A-2 477 754**
**FR-A-2 517 868**

(73) Proprietor: **Siemens Aktiengesellschaft Berlin und München**
**Wittelsbacherplatz 2**
**D-8000 München 2 (DE)**

(72) Inventor: **Busselman, Gary John**
**2729 Van Giesen**
**Richland Washington 99336 (US)**
Inventor: **Reparaz, Adolfo**
**8514 W. Falls Place**
**Kennewick Washington 99336 (US)**

Courier Press, Leamington Spa, England.

## Description

This invention pertains to a device for both repairing a fuel rod assembly damaged by baffle jetting induced vibrations and for thereafter substantially reducing the possibility of further vibrational damage and a method according the preamble of claim 3.

Nuclear reactors of the pressurized water type make use of high velocity water flow in order to remove the heat from the fuel rods in the reactor core. The cooling water travels to the core through a variety of passages one of which is immediately adjacent to the edge of the reactor core. The material separating core coolant from the incoming coolant is stainless steel plate approximately 5.08 cm thick, and is known as the Baffle Plate. The pressure of the water outside the baffle may be 207 Pa higher than that within the reactor core. Occasionally, there are gaps between the various plates which make up the core baffle. The differential water pressure between the outside of the baffle and the inside cause the water to flow rapidly through these gaps. This water flow is referred to as a "water jet" and since the reactor core is essentially full of fuel rods the water jet impinges on or very near a fuel rod. The usual water flow within a reactor core is bottom to top, parallel to the fuel rods. The baffle gap induced jet flow is perpendicular to the usual water flow. When the baffle jet strikes the fuel rod from the side it tends to induce a vibration into the fuel rod. This vibration tends to cause excessive wear on the fuel rods where they contact their normal support points which are called spacers. This type of wear is known as fretting and may proceed completely through the fuel rod cladding which results in escape of fission products from the nuclear fuel into the reactor cooling water. Fission products in the cooling water make normal reactor maintenance more difficult and much more expensive to the utilitiy. Attempts at preventing or closing the baffle gaps have not been satisfactory. Some utilities have considered rerouting the cooling water prior to entering the core, so as to reduce the differential pressure which causes the jetting. This rerouting, however, is extremely expensive and requires a lengthy reactor shutdown.

In the prior publication FR—A—25 17 868 and in the older application EP—A1—01 17 073 means for securing together a plurality of fuel rods of a fuel rod assembly to reduce substantially vibrational amplitudes and vibrational damage are described.

The invention, in different aspects, relates to a means for either or both preventing or at least reducing the possibility of damage in nuclear fuel rods subjected to induced vibration, and for repairing such damage. Fuel rods in pressurized water type nuclear reactors are sometimes introduced to impinging water jets and differential pressures that can cause the fuel rods to vibrate and eventually become worn or damaged.

According to the invention, from one aspect, said device comprises:

an inert rod for replacing a damaged fuel rod of said fuel rod assembly, said inert rod being secured in place; and

clip means on said inert rod for securing together said inert rod and a plurality of fuel rods juxtaposed to said inert rod, thereby both securing said inert rod in said fuel rod assembly, and substantially reducing further vibrational damage by changing the mass of said fuel rods for reducing vibrational amplitudes of said fuel rod assembly.

According to the invention, from another aspect, said method, comprises the steps of:

removing from the uppermost one of said plurality of grid spacers the portion of said grid spacer overlying a portion of said damaged fuel rod;

pulling the freed upper portion of said damaged fuel rod through the removed portion of said grid spacer, away from said fuel rod assembly;

pulling said damaged fuel rod upward to slide it out of the other ones of said grid spacers and ultimately out of said fuel rod assembly;

sliding said inert rod into the space and grid spacer locations formerly occupied by said damaged fuel rod;

pushing the upper end of said inert rod through the removed portion of the uppermost one of said grid spacers; and

securing said inert rod to selected ones of said fuel rods juxtapositioned on either side of said inert rod by means of clip means on said inert rod, thereby securing said inert rod into said fuel rod assembly.

In order to eliminate or reduce damage due to vibrational wear, known as fretting, in one embodiment the invention utilizes a plurality of clips to secure together at least two, and preferably four or five fuel rods. The rods are secured at various locations along the length or mid-portion of the fuel rod assembly. In a preferred embodiment, the clips are usually placed in the corner of the assembly, because this is usually the section of the assembly which receives the impinging water jet.

When the rods are secured together, their increased or combined mass will vibrate at much lower amplitudes thus eliminating the problem of fretting.

An inert rod is placed or disposed amongst the clip secured fuel rods to secure each clip against axial movement along the fuel assembly. In another embodiment of the invention, the inert rod is used in combination with the clips to replace a damaged fuel rod, for repairing a fuel rod assembly.

This invention will be better understood and shall become more apparent with reference, by way of example, to the following detailed description considered in conjunction with the accompanying drawings, in which like items or elements may be identified with the same reference number and in which:—

Figure 1 is a schematic cross-section of a typical pressurized water reactor core illustrating the flow of water past the fuel rods of the core;

Figure 2 is a partial schematic plan or top view of the core of Figure 1, illustrating the problem of water jetting due to gaps or separations in the baffle joints of the baffle plates;

Figure 3 is a partial schematic perspective view of a fuel rod assembly disposed in the nuclear reactor, core of Figure 1, and depicting one form of apparatus of this invention;

Figure 4 is an enlarged plan or top view of one of the clips of Figure 3, viewed along lines 4—4 showing the attachment of the clip about the fuel· rods of the assembly;

Figure 5 is an enlarged cut-away perspective view of a section of the fuel rod assembly shown in Figure 3;

Figure 6 is a cut-away perspective view of a portion of the section depicted in Figure 4;

Figure 7 is a pictorial view of a damaged fuel rod being removed from a fuel rod assembly;

Figure 8 is a pictorial view of a repaired fuel rod assembly; and

Figure 9 is an isometric view of one of the clips of one embodiment of the invention.

Generally speaking, the invention is concerned with the problem of resonance in fuel rods disposed in a pressurized water type nuclear reactor. The problem of resonance is caused by "water jetting". Gaps and/or separations may occur in the baffle joints of the core baffle plates. These gaps allow a jet of water to impinge upon adjacent fuel rods. Fuel rods have not been designed to withstand the transverse forces created by these water jets.

This problem is overcome by securing together the fuel rods adjacent to the gaps in order to change their vibrational amplitudes. Experiments have shown that severe fuel rod vibration can begin with as little as two pounds per square inch differential pressure acting through a baffle gap of 0.0762 cm. By placing two of the clips at approximately 1/3 and 2/3 of the axial distance between the normal fuel rod spacers; noticeable fuel rod vibration does not occur until a differential pressure of 82,8 Pa pounds per square inch is reached acting through a gap of 0.0762 cm. The actual number of clips required to correct a vibration condition will depend upon the number of rods tied together by each clip and the locations selected for placement about the fuel rod assembly.

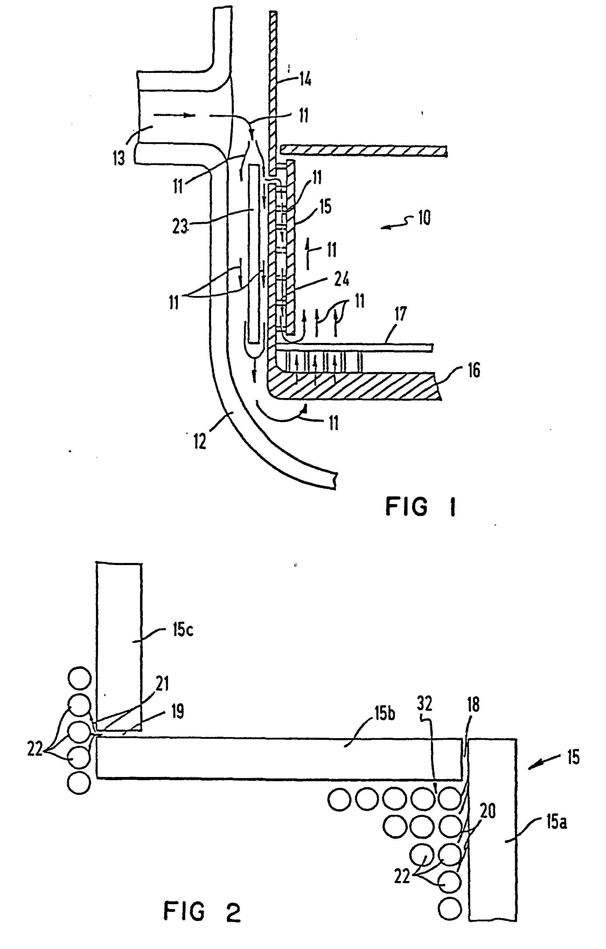

With reference to Figure 1, a typical reactor core 10 is shown for a pressurized water type reactor 12. The flowing cooling water path to core 10 is depicted by arrows 11. The cooling water enters the inlet 13 and proceeds downwardly past the outside of the core barrel 14 and baffle plate 15. The water enters core 10 through support and lower core plates 16 and 17, respectively. The water flows past the fuel rods 22 (Figure 2) in a parallel direction from bottom to top. Normal operation of this reactor 12 does not contemplate any transverse or perpendicular water flow against the fuel rods. The fuel rods and fuel assemblies (not shown) are not, therefore, designed to withstand any differentials in pressure or forces generated in the transverse direction.

Referring to Figure 2 an impingement condition is shown for the reactor 12 of Figure 1. The baffle plate 15 is shown in top view, in three sections designated 15a, 15b, and 15c. Gaps can occur in the baffle joints 18 and 19, respectively, such that water jets can be created. The flow paths for the water jets are shown by respective arrows 20 and 21. These water jets 20 and 21, respectively impinge at transverse or perpendicular angles to the fuel rods 22, creating the aforementioned resonant condition.

The cross-flow 20 and 21 is a high velocity jetting because a pressure differential is established between the downward flow 11 between the barrel 14 and annulus 23 and former plates 24, and the upward flow 11 through the core 10 inside the barrel 14. The high velocity jetting 20 and 21 induces excessive rod motion producing severe wear and degradation to rods 22.

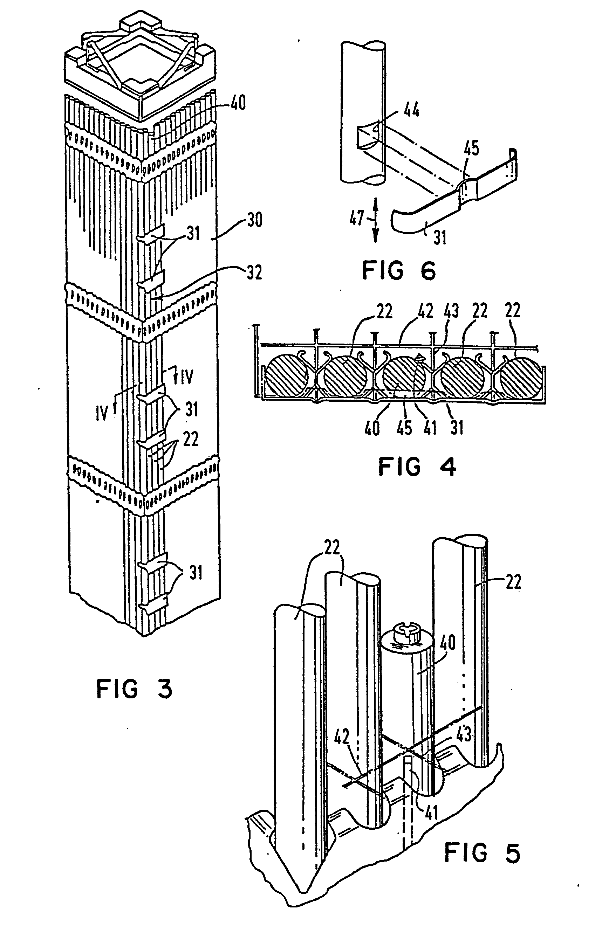

Referring to Figure 3 a typical fuel rod assembly 30, is depicted for core 10 of Figures 1 and 2. The fuel rods 22 of assembly 30 are shown braced together by a clip 31 at a corner section 32 thereof. This corner section is the corner section 32 shown in Figure 3. The clip 31 is designed to secure together four or five fuel rods 22 as shown in greater detail in Figure 4. The clips 31 affect the vibrational amplitude of the fuel rods 22 by changing their overall mass. Thus, the secured rods 22 act as a combined or increased mass, which causes the vibrational amplitude of the rods to decrease. This vibrational change prevents the severe resonant condition which causes wear and fretting of the rods.

The rods 22 located in the proximity of the center gap 19 can similarly be secured to prevent or reduce severe vibrations.

The clips 31 are placed along the length or midportion of the assembly 30 as shown. The number of clips and their location about the assembly 30 depends upon the severity of the pressure differential, the number of rods 22 which are secured by clip 31, and the length of the assembly 30.

Generally speaking, it has been found that between 10 and 25 clips are needed for each assembly experiencing the water jet induced vibration.

The clips 31 are generally secured to the rods 22 and assembly 30 prior to installing the fuel rods or assemblies into the core.

The clips 31 can be made of Inconel or stainless steel.

In order to prevent any of the clips 31 from shifting, generally in an axial direction about said assembly 30, an inert rod 40 is placed amongst secured fuel rods 22 in the assembly 30, as shown in Figures 3, 4 and 5. Referring to Figures 5 and 6, the inert rod 40 has a tab 41 welded along its length which tab 41 abuts against assembly spacers 42 and 43. This tab 41 prevents rotation of rod 40 within the fuel rod bundle, and maintains notches 44 (typical) in contact with a dimple abutment 45 (typical) of each clip 31. Contact of abutment 45 of each clip 31 with their respective notches 44 prevents slippage or movement (arrows 47) of the clips 31 with respect to the fuel rod assembly 30, due to relaxation of the spring force of the clips from irradiation, and/or due to the flow induced vibrations.

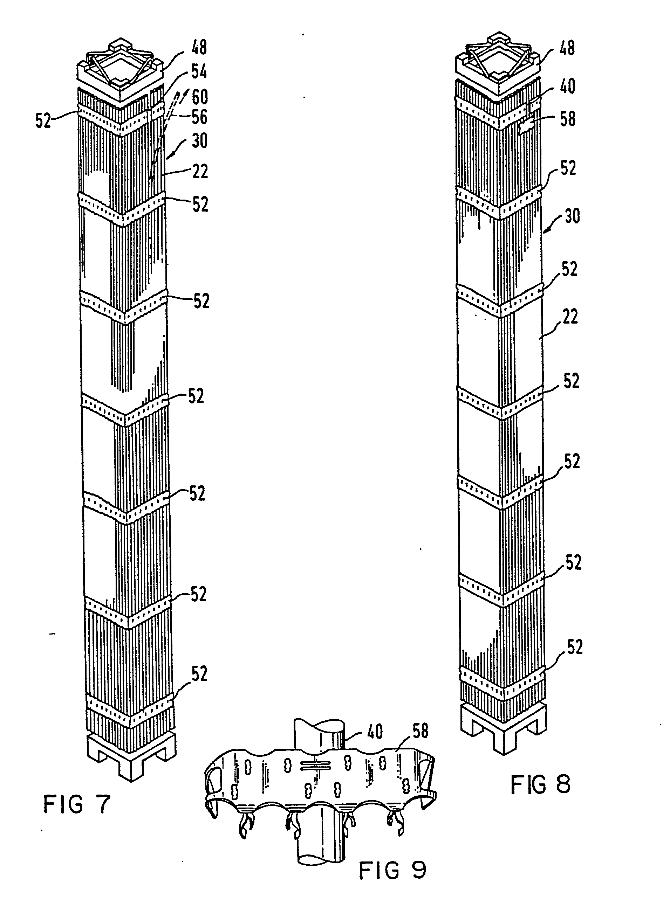

In instances where damage to a fuel rod assembly 30 has occurred due to vibrational damage known as "baffle jetting", the damage is usually limited to fuel rods 22 located in the periphery of a fuel assembly. To replace a damaged fuel rod 22 located even in the periphery of a fuel rod assembly 30, typically first requires destructive removal of an existing upper tie plate 48 (see Figure 7), to permit a damaged fuel rod to be slid out of the grid spacers 52 and replaced. Such a repair process is very time consuming and expensive.

With reference to Figures 4, 7, 8 and 9, the clips 31 or 58 in combination with an inert rod 40, permit easy replacement of a damaged peripheral fuel rod 56 of a fuel rod assembly 30. The method of repair involves cutting through the uppermost grid spacer 52 in an area 54 lying over a portion of the damaged rod 56. The upper portion of the rod 56 is then pulled through the cut portion away from the fuel rod assembly 30, and next pulled in the direction of arrow 60, to slide the rod 56 out of the lower grid spacers 52, for removal from fuel assembly 30. In this example, a fuel rod clip 58 (or 31) is welded at an appropriate location to an inert rod 40 as shown in Figure 9. The inert rod 40 is then slid into the lower grid spacers 52. The upper portion of the inert rod is pushed laterally through the cut in the uppermost grid spacer 52, concurrent with pushing the clip 58 (or 31) into engagement with fuel rods 22 adjacent or juxtaposed to the inert rod 40, as shown in Figure 8. In this manner the clip 58 (or 31) serves to support the inert rod 40 via attachment to the adjacent or juxtaposed fuel rods 22 thereto. In the preferred embodiment the clip 58 is located close to the uppermost grid spacer 52 in an area where the clip 58 engages fuel rods 22 where no power is being generated from the fuel rods 22. Consequently, local overheating of the associated fuel rods 22 is avoided.

**Claims**

1. Device for both repairing a fuel rod assembly damaged by baffle jetting induced vibrations, and for thereafter substantially reducing the possibility of further vibrational damage, said device comprising:

an inert rod (40) for replacing a damaged fuel rod of said fuel rod assembly, said inert rod being secured in place; and

clip means (31, 58) on said inert rod for securing together said inert rod and a plurality of fuel rods juxtaposed to said inert rod, thereby both securing said inert rod in said fuel rod assembly, and substantially reducing further vibrational damage by changing the mass of said fuel rods for reducing vibrational amplitudes of said fuel rod assembly.

2. Device according to claim 1 further including a plurality of said clip means (31) installed at different locations on said fuel rod assembly, for securing together different combinations of either one or both of said inert rod, and successively juxtaposed fuel rods, for substantially reducing vibration and resultant damage of said fuel rods (Fig. 3).

3. A method for repairing a fuel rod assembly having a damaged peripherally located fuel rod, said fuel rod assembly including a plurality of spaced apart grid spacers (52) for holding a plurality of fuel rods (22) of said assembly in a predetermined position within said assembly, and a tie plate (48) located at the top of said assembly and rigidly secured at the ends of said fuel assembly, characterised by replacing said damaged fuel rod with an inert rod (40) and comprising the steps of:

removing from the uppermost one of said plurality of grid spacers (52) the portion (54) of said grid spacer overlying a portion of said damaged fuel rod;

pulling the freed upper portion of said damaged fuel rod through the removed portion (54) of said grid spacer (52), away from said fuel rod assembly;

pulling said damaged fuel rod upward to slide it out of the other ones of said grid spacers and ultimately out of said fuel rod assembly; (Fig. 7)

sliding said inert rod (40) into the space and grid spacer locations formerly occupied by said damaged fuel rod;

pushing the upper end of said inert rod through the removed portion of the uppermost one of said grid spacers; and

securing said inert rod (40) to selected ones of said fuel rods juxtapositioned on either side of said inert rod by means of clip means (58) on said inert rod, thereby securing said inert rod into said fuel rod assembly (Fig. 8).

4. A method according to claim 3, wherein said step of securing includes clipping together, by means of said clip means (58), said inert rod (40) with said selected ones of said fuel rods.

5. A method according to claim 3 or 4, wherein said step of securing further includes changing the mass of said plurality of fuel rods for reducing vibrational amplitudes of said fuel rod assembly due to baffle jetting, thereby substantially reducing subsequent vibrational damage to said either or both said plurality of fuel rods and fuel rod assembly.

**Patentansprüche**

1. Vorrichtung zum Reparieren eines Brennstabelementes, das aufgrund von durch "baffle jetting" erzeugten Schwingungen beschädigt ist und/oder zum anschließenden wesentlichen Reduzieren der Möglichkeit weiterer Beschädigung durch Schwingungen, gekennzeichnet durch einen neutralen Stab (40), der einen beschädigten Brennstab des besagten Brennstabelementes ersetzt und der stellenweise befestigt ist und eine Klammer (31, 58) auf dem neutralen Stab, die diesen neutralen Stab und mehrere, neben diesem neutralen Stab befindliche Brennstäbe zusammenhält, wodurch sowohl der neutrale Stab in dem Brennstabelement gehalten als auch weitere Beschädigungen durch Schwingungen aufgrund Verändern der Masse der Brennstäbe unter Reduzierung der Schwingungsamplituden des Brennstabelementes wesentlich reduziert werden.

2. Vorrichtung nach Anspruch 1, gekennzeichnet durch mehrere Klammern (31), die an verschiedenen Stellen auf dem Brennstabelement zum Zusammenhalten verschiedener Kombinationen von neutralem Stab und der Reihe nach nebeneinander angeordneter Brennstäbe oder nur der Reihe nach nebeneinander angeordneter Brennstäbe unter wesentliche Reduzierung von Schwingungen und aus ihnen resultierender Zerstörung der Brennstäbe angebracht sind (Fig. 3).

3. Verfahren zum Reparieren eines Brennstabelementes mit einem an der Außenseite befindlichen, beschädigten Brennstab und mit mehreren auseinanderliegenden Abstandhaltergittern (52) zum Halten mehrerer Brennstäbe (22) des Elementes in einer vorgegebenen Position innerhalb des Elementes und mit einer Kopfplatte (48) am Oberende des besagten Elementes, die fest am Ende des Brennstabelementes angebracht ist, gekennzeichnet durch das Ersetzen des beschädigten Brennstabes durch einen neutralen Stab (40) und folgende Verfahrensschritte:

vom obersten Abstandhaltergitter (52) wird der Teil (54) dieses Abstandhaltergitters entfernt, der einen Teil des beschädigten Brennstabes überlagert;

das freigelegte Oberende des beschädigten Brennstabes wird durch den entfernten Teil (54) des besagten Abstandhaltergitters (52) weg vom Brennstabelement weggezogen

der beschädigte Brennstab wird nach oben und damit aus den anderen Abstandhaltergittern und schließlich aus dem Brennstabelement herausgezogen (Fig. 7);

der neutrale Stab (40) wird in den Platz und an die Stellen der Abstandhaltergitter geschoben, die ursprünglich vom beschädigten Brennstab eingenommen waren;

das Oberende des neutralen Stabes wird durch den entfernten Teil des obersten Abstandhaltergitters hindurchgedrückt; und

der neutrale Stab (40) wird an bestimmten, beiderseits dieses neutralen Stabes nebeneinander angeordneten Brennstäben mit auf dem neutralen Stab befindlichen Klammern (58) befestigt, wodurch der neutrale Stab in dem Brennstabelement gehaltert wird (Fig. 8).

4. Verfahren nach Anspruch 3, gekennzeichnet durch Zusammenklammern des neutralen Stabes (40) mit den ausgewählten Brennstäben mit Hilfe der Klammern (58) beim Befestigungsschritt.

5. Verfahren nach Anspruch 3 oder 4, gekennzeichnet durch Verändern der Masse der Brennstäbe beim Befestigungsschritt zur Reduzierung von Schwingungsamplituden des Brennstabelementes, die durch "baffle jetting" hervorgerufen werden, wodurch nachfolgende Schwingungsbeschädigungen an mehreren Brennstäben und/ oder am Brennelement wesentlich reduziert werden.

**Revendications**

1. Dispositif prévu à la fois pour réparer un assemblage de crayons combustibles endommagé par des vibrations induites par l'effet de jet de cloisonnement, et pour réduire ensuite notablement la possibilité d'un endommagement ultérieur par des vibrations, ce dispositif comprenant:

un crayon inerte (40) destiné à remplacer un crayon combustible endommagé de l'assemblage de crayons combustibles, ce crayon inerte étant fixé en place; et

une structure d'agrafe (31, 58) sur le crayon inerte, pour fixer ensemble le crayon inerte et un ensemble de crayons combustibles juxtaposés au crayon inerte, pour ainsi à la fois fixer le crayon inerte dans l'assemblage de crayons combustibles, et réduire notablement tout endommagement ultérieur par des vibrations, en changeant la masse des crayons combustibles, pour réduire les amplitudes de vibration de l'assemblage de crayons combustibles.

2. Dispositif selon la revendication 1, comprenant en outre un ensemble des structures d'agrafe (31) installées en différents emplacements sur l'assemblage de crayons combustibles, pour fixer ensemble différentes combinaisons comprenant soit le crayon inerte, soit des crayons combustibles juxtaposés en succession, soit les deux, pour réduire notablement la vibration et l'endommagement résultant des crayons combustibles (figure 3).

3. Un procédé de réparation d'un assemblage de crayons combustibles comportant un crayon combustible endommagé placé en position périphérique, cet assemblage de crayons combustibles comprenant un ensemble de grilles d'espacement (52) mutuellement espacées, pour maintenir un ensemble de crayons combustibles (22) de l'assemblage dans une position prédéterminée à l'intérieur de l'assemblage, et un embout (48) placé au sommet de l'assemblage et fixé rigidement aux extrémités de l'assemblage combustible, caractérisé par le remplacement du crayon combustible endommagé par un crayon inerte (40), et comprenant les opérations suivantes:

on retire de la grille supérieure parmi l'ensemble de grilles d'espacement (52) la partie (54) de cette grille d'espacement qui recouvre une partie du crayon combustible endommagé;

on tire la partie supérieure libérée du crayon combustible endommagé, de façon à la faire passer à travers la partie enlevée (54) de la grille d'espacement (52), en l'extrayant de l'assemblage de crayons combustibles;

on tire vers le haut le crayon combustible endommagé, pour le faire glisser hors des autres grilles d'espacement, et pour le faire sortir finalement de l'assemblage de crayons combustibles (figure 7);

on fait glisser le crayon inerte (40) dans l'espace et dans les positions de grilles d'espacement qui étaient occupés précédemment par le crayon combustible endommagé;

on pousse l'extrémité supérieure du crayon inerte à travers la partie enlevée de la grille supérieure parmi les grilles d'espacement; et

on fixe le crayon inerte (40) à des crayons sélectionnés parmi des crayons combustibles juxtaposés de part et d'autre du crayon inerte, au moyen d'une structure d'agrafe (58) montée sur le crayon inerte, pour fixer ainsi le crayon inerte dans l'assemblage de crayons combustibles. (figure 8).

4. Un procédé selon la revendication 3, dans lequel l'opération de fixation comprend l'opération consistant à agrafer ensemble, au moyen de la structure d'agrafe (58), le crayon inerte (40) et les crayons sélectionnés parmi les crayons combustibles.

5. Un procédé selon la revendication 3 ou 4, dans lequel l'opération de fixation comprend en outre le changement de la masse de l'ensemble de crayons combustibles, pour réduire les amplitudes de vibration de l'assemblage de crayons combustibles résultant de l'effet de jet de cloisonnement, afin de réduire ainsi notablement un endommagement par vibration ultérieur de l'ensemble de crayons combustibles, de l'assemblage de crayons combustibles ou des deux.

FIG 1

FIG 2

FIG 3

FIG 6

FIG 4

FIG 5

FIG 7

FIG 8

FIG 9

3